## Europäisches Patentamt
(19) **European Patent Office**
**Office européen des brevets**

(11) Veröffentlichungsnummer: **0 113 428
B1**

(12) ## EUROPÄISCHE PATENTSCHRIFT

(45) Veröffentlichungstag der Patentschrift:
**13.05.87**

(51) Int. Cl.⁴: **C 08 J 7/12**

(21) Anmeldenummer: **83112013.4**

(22) Anmeldetag: **30.11.83**

(54) **Verfahren zur Fluorierung einer Oberflächenschicht von Formkörpern aus Kunststoff.**

(30) Priorität: **11.12.82 DE 3245915**

(43) Veröffentlichungstag der Anmeldung:
**18.07.84 Patentblatt 84/29**

(45) Bekanntmachung des Hinweises auf die Patenterteilung:
**13.05.87 Patentblatt 87/20**

(84) Benannte Vertragsstaaten:
**AT BE CH DE FR GB IT LI LU NL SE**

(56) Entgegenhaltungen:
**FR - A - 1 453 455
US - A - 4 081 574**

(73) Patentinhaber: **Hewing GmbH & Co., Waldstrasse 3,
D-4434 Ochtrup (DE)**

(72) Erfinder: **Bliefert, Claus, Prof. Dr., Meisenstrasse 60,
D-4437 Schöppingen (DE)**
Erfinder: **Boldhaus, Hans-Michael, Chem.-Ing.,
Bentheimer Strasse 56, D-4444 Bad Bentheim 2 (DE)**
Erfinder: **Hoffmann, Manfred, Dipl.-Ing., Alt Metelner
Weg 23, D-4434 Ochtrup (DE)**

(74) Vertreter: **Patentanwälte Schulze Horn und Hoffmeister,
Goldstrasse 36, D-4400 Münster (DE)**

## Beschreibung

Die Erfindung betrifft ein Verfahren zur Fluorierung einer Oberflächenschicht von Formkörpern aus Kunststoff gemäss dem Oberbegriff des Anspruchs 1.

Aus der SU-A 3 30 177 (referiert in DE-C 23 28 037) ist es bekannt, die Oberfläche von Kautschukformkörpern durch deren Eintauchen in ein Bad mit flüssigem Antimonpentafluorid als Fluorierungsmittel zu behandeln. Der Behandlung folgen drei Waschvorgänge, einer davon mit einer 5–20%igen wässrigen Lösung von Alkalimetallcarbonat. Ein Nachteil dieses Verfahrens ist ein sehr grosser Verbrauch von Antimonpentafluorid bei dem Herausheben der Formkörper. Ein Abfliessenlassen der Flüssigkeit führt zu einer ungleichmässigen Fluorierung, ja sogar zur Zerstörung des Formkörpers. Eine grosstechnische Anwendung des bekannten Verfahrens wird als unrentabel bezeichnet.

Darüber hinaus ist durch die FR-A 14 18 884 bekannt, die Oberfläche von Kunststoff-Formkörpern in inerten Lösungsmitteln, z.B. in Halogenkohlenwasserstoffen, oder in Wasser zu chlorieren. Fluor und Chlor sind aber in ihrem Verhalten und in ihrer Reaktivität so sehr unterschiedlich, dass analoge Schlüsse aus dem Verhalten von Chlor auf eine Fluorbehandlung in einem Lösungsmittel von vornherein unzulässig sind.

Im Gegensatz zu Chlor ist Fluor so reaktiv, dass es z.B. mit Wasser unter Bildung von Reaktionsproduktion wie Fluorwasserstoff, Ozon, Sauerstoff und Sauerstoffdifluorid reagiert. Eine einfache Übertragung der Kenntnisse aus den bekannten Chlorierungsverfahren von Formkörpern auf ein Fluorierungsverfahren ist daher nicht möglich.

Demgegenüber stellt sich die Aufgabe, ein Verfahren zur Fluorierung einer Oberflächenschicht von Formkörpern anzugeben, bei dem in einem Bad oder durch anderes Einwirkenlassen einer fluorabgebenden Flüssigkeit (z. B. durch Einfüllen und Schwenken in einem Behälter) eine Kontrollierbare, rentable und reproduzierbare Fluorierungsreaktion durchgeführt werden kann.

Diese Aufgabe wird bei einem Verfahren der eingangs genannten Art dadurch gelöst, dass die Flüssigkeit aus einem Lösungsmittel oder Lösungsmittelgemisch mit gelöstem elementarem Fluor besteht, wobei das Lösungsmittel oder Lösungsmittelgemisch selbst nur geringfügig oder nicht mit Fluor reagiert, die Oberfläche des Formkörpers im wesentlichen unbeeinflusst lässt und eine flüssige Phase wenigstens innerhalb eines Temperaturbereiches aufweist, in der eine Fluorierungsreaktion kontrollierbar verläuft, wobei während der Einwirkung der Flüssigkeit im wesentlichen elementares Fluor mit dem Material der Oberflächenschicht reagiert.

Dieses Verfahren unter Verwendung einer Flüssigkeit, die elementares Fluor gelöst enthält, unterscheidet sich wesentlich von Verfahren zur Fluorierung von Kunststoffkörpern, bei denen die Formkörper mit Fluor in der Gasphase behandelt werden. Hier ist ein sehr weitgehender Stand der Technik bekannt (vgl. US-A 38 62 284, 39 88 491, 40 81 574, Zeitschrift «Plaste und Kautschuk», 24 (1977) 617, und hieraus entnehmbare weitere Hinweise).

Der Stand der Technik vemittelt den Eindruck, dass scheinbar die Gasphasenfluorierung einen Entwicklungsstand erreicht hat, bei dem Probleme wegen der hohen Reaktivität von elementarem Fluor in der Gasphase und gegenüber Kunststoffen durchaus beherrscht werden.

Bei genauer Kenntnis ergibt sich aber, dass die Fluorbehandlung von Kunststoff-Formkörpern in der Gasphase Sicherheitsrisiken beinhaltet, da die Reaktionswärme erheblich ist und nur mit grossem Aufwand abgeführt werden kann. Will man keine unpraktikablen Einwirkungszeiten oder Zersetzung des Kunststoffes in Kauf nehmen, so sind die Variationen von Temperatur und Fluorkonzentration eng begrenzt. Im allgemeinen sind bei der Gasphasenfluorierung wegen des relativ geringen Fluorgehaltes im Flur-/Inertgasmisch lange Einwirkzeiten notwendig, um die gewünschte Veränderung der Kunststoffoberfläche zu erreichen. Dennoch gelingt es wegen der unvermeidbaren lokalen Überhitzung nicht, Oberflächenschichten reproduzierbar gleichmässig zu fluorieren. Auch sind diese Verfahren für eine kontinuierliche Fluorierung einzelner Formkörper weniger gut geeignet. Überdies ist die Entsorgung problematisch, und es sind die Vorschriften des Immissionsschutzes relativ schwer einzuhalten.

Durch die FR-A 14 53 455 ist zwar schon eine Fluorbehandlung bekannt, bei der pulverförmiges organisches Polymermaterial in flüssigen Halogenkohlenwasserstoffen dispergiert wird, um eine Fluidisierung des Polymerpulvers zu erreichen. Diese Verfahrensweise ergibt sich zwangsläufig, da pulverförmige Polymere in der Gasphase mit elementarem Fluor nicht zu fluorieren sind und infolge der geringen Wärmeabfuhr bei der Reaktion mit Fluor verkleben oder gar explosionsartig reagieren würden. Hierbei handelt es sich ausschliesslich um ein Verfahren zur Behandlung von pulverförmigem Polymermaterial in Dispersion mit dem Ziel, möglichst viel Fluor in die Kunststoffmasse einzubringen. Im Gegensatz dazu geht es bei dem erfindungsgemässen Verfahren um eine schonende Veredelung der Oberfläche von Kunststoff-Formkörpern. Das obengenannte Fluorierungsverfahren hat nie an Bedeutung gewonnen, so dass es auf der Suche nach einem geeigneten Verfahren zur Fluorierung von Kunststoff-Formkörpern nie in die Überlegungen mit einbezogen worden ist.

Insbesondere musste angenommen werden, dass sich Fluor in einem Lösungsmittel und Fluor in der Gasphase gleich verhalten würden; dies wird in der FR-A 14 53 455 dadurch dokumentiert, dass nur die verwendeten Fluorgasdrucke beschrieben sind, die Fluorkonzentration in den Lösungen jedoch vollkommen unberücksichtigt gelassen sind. Standardverfahren für die Fluorierung von Kunststoffen waren also immer Gasphasenfluorierungen.

Das erfindungsgemässe Verfahren unterscheidet sich jedoch von allen zuvor beschriebenen Fluorierungsverfahren dadurch, dass echte, verdünnte Fluorlösungen, gegebenenfalls mit einem Überschuss an austretendem, ausperlendem Fluor, hergestellt und die Formkörper damit behandelt werden. Solche Lösungen unterscheiden sich in ihrem Verhalten von gasförmigem Fluor (auch wenn es durch ein Lösungsmittel perlt) wesentlich dadurch, dass das Fluor gelöst vorliegt und eine überaus milde oberflächliche Fluorierung bewirkt.

Das erfindungsgemässe Verfahren vermeidet also die Nachteile der Gasphasenfluorierung. Mit ihm ist es möglich, Formkörper in ein Becken mit einer Fluor enthaltenden Flüssigkeit zu tauchen oder die Formkörper (Rohre, Behälter und ähnliches) mit dieser Flüssigkeit zu füllen, wobei die Einwirkungszeit sehr genau bemessen werden kann.

Durch das erfindungsgemässe Verfahren lässt sich weiterhin nicht nur die bei der Oberflächenfluorierung der Formkörper auftretende Wärme problemlos abführen. Überraschenderweise hat sich gezeigt, dass durch die verwendeten Lösungsmittel ein Anquellen der Kunststoffoberfläche verursacht wird, welches das Eindringen des Fluors begünstigt und zu einer bedeutend intensiveren Veredelung der Kunststoffoberfläche bei gleichzeitiger schonender Behandlung der Formkörper führt.

Als Lösungsmittel eignen sich insbesondere flüssige Halogenkohlenwasserstoffe (niedermolekulare, aliphatische und cycloaliphatische Kohlenwasserstoffverbindung, die meist vollständig durch Chlor und/oder Fluor substituiert sind). Derartige Halogenkohlenwasserstoffe sind beispielsweise in DIN 8 962 gelistet und klassifiziert. Die Auswahl dieser Halogenkohlenwasserstoffe als geeignete Lösungsmittel geschieht im wesentlichen nach ihrer Preiswürdigkeit und nach dem Kriterium, ob sie innerhalb des Temperaturbereiches −30 °C ... + 10 °C flüssig sind. Unter diesem Gesichtspunkt sind insbesondere Trichlorfluormethan, Dibromdifluormethan, 1,1,2-Trichlortrifluorethan, 1,2-Dibromtetrafluorethan oder 1,1-Dichlordifluorethylen oder Gemische daraus geeignet.

Insbesondere ist vorteilhaft, dass bei derartigen Lösungsmitteln mit Temperaturen im Bereich um etwa −20 °C gearbeitet werden kann. Die bei der Fluorierung sich ergebende Reaktionswärme wird ohne weiteres über die tiefgekühlte Flüssigkeit abgeführt.

Sogar Wasser lässt sich als Lösungsmittel verwenden. Zwar reagiert Wasser selbst bei niedrigen Temperaturen mit Fluor zu verschiedenen Verbindungen, die jedoch ihrerseits teilweise selbst fluorierend wirken. Die Fluorierung in Wasser als Lösungsmittel muss aber auf spezielle Kunststoffe beschränkt bleiben.

Durch laufendes, kontrolliertes Einleiten von Fluorgas, vorzugsweise unter Beimischung eines geeigneten fluorinerten Gases, wie z.B. Stickstoff oder Helium, die in einem Verhältnis von 1 : 5 bis 1 : 100, vorzugsweise 1 : 10 gemischt sind, wird der Fluorgehalt in der Flüssigkeit standardisiert. Das Gasgemisch kann auch vorgekühlt werden. Es hat sich gezeigt, dass einige physikalische Eigenschaften der Kunststoff-Formteile noch weiter verbessert werden können, wenn man in dem Lösungsmittel oder dem Lösungsmittelgemisch neben Fluor noch andere Gase wie Schwefeldioxid, Sauerstoff, Kohlenmonoxid, Kohlendioxid, Chlor, Brom oder Gemische dieser Gase löst und die Kunststoff-Formkörper mit oder in diesen Lösungen behandelt. Dabei ist stets dafür zu sorgen, dass der zu behandelnde Formkörper nur mit der Fluor-Lösung, nicht jedoch mit dem eingeleiteten Fluor-Inertgas-Gemisch in Kontakt kommt.

Die drei Parameter Konzentration, Temperatur und Einwirkzeit können wie folgt variiert werden:

Fluorkonzentration

Die Fluorkonzentration in der Flüssigkeit kann in einem Bereich von $1 \times 10^{-5}$ mol/l bis maximal zur Sättigung liegen, vorzugsweise im Bereich zwischen $0,5 \times 10^{-3}$ bis $1 \times 10^{-2}$ mol/l.

Temperatur

Die Fluorierungsreaktion kann bei Temperaturen zwischen −70 °C und der Siedetemperatur des Lösungsmittels oder Lösungsmittelgemisches stattfinden, vorzugsweise im Bereich von −30 °C bis 0 °C

Einwirkzeit

Die Einwirkzeit kann zwischen 1 s und 10 Tagen liegen, vorzugsweise zwischen 20 s und 10 min.

Es ist ersichtlich, dass ausserhalb dieser Grenzen durchaus Reaktionen durchgeführt werden können, wenn dies nach fachmännischem Ermessen praktikabel erscheint, ohne dass der Schutzumfang der Erfindung verlassen wird.

Zur Erläuterung der Erfindung werden im folgenden Beispiele und Reaktionsabläufe beschrieben:

Beispiel 1

In einem geschlossenen, fluorresistenten Reaktionsgefäss mit ca. 10 l Inhalt wird durch Einleiten von mit Inertgas verdünntem, vorgekühltem Fluor eine Fluorkonzentration von $10^{-2}$ mol/l aufrechterhalten. Das Gefäss ist mit Trichlorfluormethan ($CCl_3F$) gefüllt. Polyethylenrohre mit einem Aussendurchmesser von 18 mm und einer Wandstärke von 2 mm werden

a) von innen und
b) von aussen

während 15 min bei −20 °C mit der genannten Flüssigkeit a) durchspült bzw. b) in einem Bad behandelt. Anschliessend werden die Rohre mit Natronlauge (Konz. ca. 1 mol/l) und mit Wasser gespült.

Unbehandelte und behandelte Rohre werden anschliessend in bezug auf Gasdurchlässigkeit, Wärmeformbeständigkeit, Beständigkeit gegen Spannungsrissbildung und Wärmealterung überprüft. Die Sauerstoffpermeationsrate unter gleichen Bedingungen wird auf weniger als 0,5% des ursprünglichen Wertes herabgesetzt. Wärmeformbeständigkeit, Beständigkeit gegen Spannungsrissbildung und Wärmealterung, gemessen mit standardisierten Methoden, ergeben signifikant verbesserte Werte.

Die Beständigkeit gegen chemische Einwirkung und gegen Lösungsmittel (z.B. n-Pentan, Benzin, Laugen und Säuren) wird wesentlich gesteigert.

Beispiel 2

Ein zylindrischer Formkörper aus vulkanisiertem Naturkautschuk wird in einem Bad mit ca. $5 \times 10^{-3}$ mol/l Fluor in 1,1,2-Trichlortrifluorethan bei $-5\,°C$ (Kühlung durch Trockeneis) über 15 min untergetaucht und damit fluoriert. Nach Waschen und Trocknung ergibt sich auf der fluorierten Oberfläche eine Gleitreibungszahl, die bedeutend geringer ist als bei unbehandeltem Kautschuk.

In ähnlicher Weise lassen sich auch andere vulkanisierte Kautschuke (stereoreguläre Butadien- und Isopren-Kautschuke, Butadien-Styrol-, Chloropren-Kautschuk, Ethylenpropylen-Kautschuk und Copolymerisate fluorhaltiger Monomere) und Butadien-Acrylnitril fluorieren. Entsprechende Veränderung der Behandlungsparameter ergibt dabei eine mehr oder weniger starke Fluorierung bzw. Eindringtiefe.

Beispiel 3

Eine Flasche (Volumen 1 l) aus Polyvinylchlorid wird von aussen in einem Bad aus Dibromdifluormethan mit einer Fluorkonzentration von etwa $10^{-2}$ mol/l bei $0\,°C$ während 60 min behandelt.

Im Vergleich zu einer unbehandelten Flasche wird die Beständigkeit gegenüber Chemikalien (z.B. Säuren, Laugen, Oxidationsmittel) und Lösungsmitteln (z.B. n-Pentan, Benzin, Dieselkraftstoff) wesentlich erhöht. Weiter wird die Gasdurchlässigkeit nahezu vollständig unterdrückt.

Beispiel 4

Eine Polypropylen-Folie (Dicke 0,1 mm) wird in ein Bad aus Tetrachlorkohlenstoff getaucht, dessen Fluorkonzentration mit Hilfe eines vorgekühlten $F_2/N_2$-Gasgemisches (Volumenverhältnis 1:50) auf etwa $10^{-3}$ mol/l gehalten wird. Nach der Behandlung wird die Folie mit Wasser gewaschen und anschliessend im warmen Luftstrom getrocknet.

Bereits nach einer Fluorierungsdauer von 15 min kann eine erniedrigte Wasserdampf- und Sauerstoffdurchlässigkeit gemessen werden

Beispiel 5

Mehrere 1,5 mm dicke Polyethylen-Platten werden in ein Perfluorbutansulfonylfluorid-Bad ($C_4F_9SO_2F$) getaucht, durch das ein $F_2He$-Gasgemisch (1:20) geleitet wird. Die Badtemperatur wird auf $-5\,°C$ eingestellt. Nach regelmässigen Zeitabständen entnommene Proben weisen eine kontinuierliche Erniedrigung der Reibungszahl und Erhöhung der Zersetzungstemperatur auf.

Beispiel 6

Anstelle der in Beispiel 4 genannten Badflüssigkeit wird Dibromdifluormethan bei $0\,°C$ bis zur Sättigung mit einem Gasstrom $F_2/N_2$ (1:10) durchströmt. Die Fluorierung erfolgt an Polyethylen-Platten, wie bei Beispiel 4, etwa 20 min lang und ergibt verbesserte Reibungszahlen wie Beispiel 4.

Beispiel 7

Anstelle der im Beispiel 4 genannten Badflüssigkeit wird 1,2-Dibromtetrafluorethan bei $-20\,°C$ mit einem $F_2/N_2$-Gasgemisch (1:50) 1 h lang durchströmt. Fluoriert werden PE-Platten wie Beispiel 4. Die Reibungszahlen verbessern sich.

Beispiel 8

Ein Spritzgussteil aus Polyamid (PA 6.6) wird in ein mit Wasser gefülltes Bad getaucht, durch das unter Rühren ein $F_2/N_2$-Gemisch (1:10) ca. 6 h lang perlt. Die Badtemperatur beträgt $0\,°C$.

Das so behandelte Formteil weist eine erheblich verbesserte Abriebfestigkeit auf.

Beispiel 9

Ein Polyethylen-Kanister (Volumen 5 l), der auf $-20\,°C$ abgekühlt ist, wird mit $CCl_3F$, in dem etwa $10^{-2}$ mol/l $F_2$ gelöst ist, gefüllt. Der zu 80 bis 90% seines Volumens gefüllte Kanister wird verschlossen und 10 min lang bei $-20\,°C$ geschüttelt.

Bei dem so behandelten Gefäss erniedrigt sich die Durchlässigkeit für n-Pentan um ein Vielfaches.

Beispiel 10

Bei der Verfahrensweise gemäss Beispiel 1 wird während der Einwirkung auf den Fremdkörper das Bad mit Hilfe einer UV-Leuchtstofflampe photoaktiviert. Die Einwirkungszeit kann bei sonst gleichen Versuchsparametern verkürzt werden.

Beispiel 11

Bei der Verfahrensweise gemäss Beispiel 1 wird während der Einwirkung auf den Formkörper das Bad mit Hilfe einer Ultraschallquelle behandelt, wobei die Energiedichte so eingestellt wird, dass eine Entgasung der Flüssigkeit nicht beobachtet wird. Auch durch diese Behandlung kann die Einwirkungszeit bei sonst gleichen Versuchsparametern verkürzt werden.

Beispiel 12

Eine Badflüssigkeit von 1,1,2-Trichlortrifluorethan wird bei Raumtemperatur mit einem Gasgemisch aus 5 Vol.-% Fluor, 5 Vol.-% Schwefeldioxid und 90 Vol.-% Stickstoff gesättigt. Eine Polyethylen-Flasche wird mit dieser Lösung von innen und aussen behandelt. Das Rückhaltevermögen für Lösungsmittel ist nach dieser Behandlung noch mehr als 10% besser als bei der Behandlung mit nur Fluor enthaltender Lösung. In ähnlicher Weise wirken Zusätze von 2 – 25 Vol.-% Sauerstoff, bis zu 25 Vol.-% Schwefeldioxid oder Kohlenmonoxid, bis zu 50 Vol.-% Kohlendioxid und/oder bis zu 50 Vol.-% Chlor oder Brom oder Gemische davon, zusammen mit einem inerten Trägergas und dem reaktionsfähigen Gas Fluor.

## Patentansprüche

1. Verfahren zur Fluorierung einer Oberflächenschicht von Formkörpern aus fluorierbaren organischen Kunststoffen oder vulkanisiertem Kautschuk durch Einwirkenlassen einer fluorabgebenden Flüssigkeit auf wenigstens einen Teil der Formkörperoberfläche in einer kontrollierbaren Reaktion, dadurch gekennzeichnet, dass die Flüssigkeit aus einem Lösungsmittel oder Lösungsmittelgemisch mit gelöstem elementaren Fluor besteht, wobei das Lösungsmittel oder Lösungsmittelgemisch selbst nur geringfügig oder nicht mit Fluor reagiert, die Oberfläche des Formkörpers im wesentlichen unbeeinflusst lässt und eine flüssige Phase wenigstens innerhalb eines Temperaturbereiches aufweist, in der eine Fluorierungsreaktion kontrolliert verläuft, wobei während der Einwirkung der Flüssigkeit im wesentlichen elementares Fluor mit dem Material der Oberflächenschicht reagiert.

2. Verfahren nach Anspruch 1, dadurch gekennzeichnet, dass als Lösungsmittel Halogenkohlenwasserstoffe verwendet werden.

3. Verfahren nach Anspruch 1 oder 2, dadurch gekennzeichnet, dass als Lösungsmittel Perfluoralkyl-Gruppen enthaltende Verbindungen verwendet werden.

4. Verfahren nach Anspruch 1, dadurch gekennzeichnet, dass als Lösungsmittel Wasser verwendet wird.

5. Verfahren nach wenigstens einem der vorhergehenden Ansprüche 1 bis 4, dadurch gekennzeichnet, dass durch kontrolliertes Einleiten von Fluorgas der Fluorgehalt der Flüssigkeit standardisiert wird.

6. Verfahren nach Anspruch 1 bis 5, dadurch gekennzeichnet, das die Fluorkonzentration im Lösungsmittel in einem Bereich von $1 \times 10^{-5}$ mol/l bis maximal zur Sättigung liegt.

7. Verfahren nach Anspruch 1 bis 6, dadurch gekennzeichnet, dass die Fluorierungsreaktion bei einer Temperatur zwischen –70 °C und der Siedetemperatur des Lösungsmittels oder Lösungsmittelgemisches durchgeführt wird.

8. Verfahren nach Anspruch 1 bis 7, dadurch gekennzeichnet, dass die Einwirkzeit 20 s bis 30 min beträgt.

9. Verfahren nach einem der vorhergehenden Ansprüche, dadurch gekennzeichnet, dass während der Einwirkung eine Photoaktivierung der Flüssigkeit durchgeführt wird.

10. Verfahren nach einem der vorhergehenden Ansprüche, dadurch gekennzeichnet, dass das Bad mit Hilfe einer Ultraschallquelle während der Einwirkung der Flüssigkeit beschallt wird.

## Revendications

1. Procédé de fluoration d'une couche superficielle d'objets moulés en matières plastiques organiques fluorables ou en caoutchouc vulcanisé par action d'un liquide cédant du fluor sur au moins une partie de la surface des objets moulés dans une réaction contrôlable. caractérisé en ce que le liquide se compose d'un solvant ou d'un mélange de solvants avec du fluor élémentaire dissous, le solvant ou le mélange de solvant ne réagissant eux-mêmes que faiblement ou pas du tout avec le fluor, qui laisse la surface de l'objet moulé pratiquement inaltérée, et présente une phase liquide au moins dans un domaine de températures dans lequel la réaction de fluoration s'effectue de manière contrôlable, le fluor élémentaire étant pratiquement seul à réagir avec la matiére de la couche superficielle pendant l'action du liquide.

2. Procédé suivant la revendication 1, caractérisé en ce que l'on utilise comme solvant des hydrocarbures halogénés.

3. Procéde suivant les revendications 1 ou 2, caractérisé en ce qu'on utilise comme solvant des composés contenant des groupes perfluoralkyle.

4. Procédé suivant la revendication 1, caractérisé en ce qu'on utilise comme solvant de l'eau.

5. Procédé suivant au moins une des revendications 1 à 4, caractérisé en ce que la teneur en fluor du liquide est normalisée par introduction contrôlée du fluor gazeux.

6. Procédé suivant les revendications 1 à 5, caractérisé en ce que la concentration en fluor dans le solvant est dans le domaine de $1 \times 10^{-5}$ mole/l jusqu'à la saturation.

7. Procédé suivant les revendications 1 à 6, caractérisé en ce que la réaction de fluoration est effectuée à une température entre –70 °C et la température d'ébullition du solvant ou du mélange de solvants.

8. Procédé suivant les revendications 1 à 7, caractérisé en ce que la durée d'action est de 20 secondes à 30 minutes.

9. Procédé suivant l'une des revendications précédentes, caractérisé en ce qu'on effectue une photoactivation du liquide pendant son action.

10. Procédé suivant l'une quelconque des revendications précédentes, caractérisé en ce qu'on traite le bain à l'aide d'une source d'ultrasons pendant l'action du liquide.

## Claims

1. Method for the fluorination of a surface layer of formed articles made of organic plastic material capable of being fluorinated or vulcanized caoutchouc by allowing a fluorine-releasing liquid to react with at least a portion of the surface of the articles in a controllable reaction, characterized in that the liquid consists of a solvent or solvent mixture containing dissolved elementary fluorine, wherein the solvent or solvent mixture as such reacts only slightly or does not react with fluorine, leaving the surface of the formed article substantially unaffected, and having a liquid phase at least within a temperature range in which a fluoridation reaction takes place under controllable conditions, and wherein essentially elementary fluorine reacts with the material of the surface layer during the exposure to the liquid.

2. Method according to claim 1, characterized in that halogenated hydrocarbons are employed as solvent.

3. Method according to claims 1 or 2, characterized in that compounds containing perfluoroalkyl groups are employed as solvent.

4. Method according to claim 1, characterized in that water is employed as solvent.

5. Method according to at least one of the preceding claims 1 to 4, characterized in that the fluorine content of the liquid is standardized by controlled introduction of fluorine gas.

6. Method according to claims 1 to 5, characterized in that the fluorine concentration in the solvent is in a range from $1 \times 10^{-5}$ mol/l up to a maximum of saturation.

7. Method according to claims 1 to 6, characterized in that the fluoridation is carried out at a temperature of between $-70\,°C$ and the boiling temperature of the solvent or solvent mixture.

8. Method according to claim 1 to 7, characterized in that the time of exposure is from 20 s to 30 min.

9. Method according to any one of the preceding claims, characterized in that the liquid is photoactivated during exposure.

10. Method according to any one of the preceding claims, characterized in that the bath is subjected to ultrasound by an ultrasonic source during exposure of the liquid.